# EUROPÄISCHE PATENTSCHRIFT

(11) **EP 0 544 938 B1**
(45) Veröffentlichungstag und Bekanntmachung des Hinweises auf die Patenterteilung: **21.06.1995**
(21) Anmeldenummer: 91120812.2
(22) Anmeldetag: 04.12.1991
(51) Int. Cl.: B60N 2/24

(54) **Doppel-Fahrgastsitz**
Double passenger seat
Siège double de passager

(43) Veröffentlichungstag der Anmeldung: 09.06.1993
(73) Patentinhaber: Ignaz Vogel GmbH & Co KG, Fahrzeugsitze, D-76228 Karlsruhe (DE)
(72) Erfinder: Vogel, Ignaz, W-7500 Karlsruhe 41-Stu. (DE)
(74) Vertreter: Trappenberg, Hans

(56) Entgegenhaltungen:
- EP-A- 0 330 594
- EP-A- 0 337 098
- DE-A- 42 565
- DE-A- 3 147 045
- DE-A- 3 638 231

## Beschreibung

Die Erfindung betrifft einen Doppel-Fahrgastsitz, gebildet aus zwei nebeneinander angeordneten Sitzen mit Rückenlehne, die auf einem Untergestell angeordnet sind, das gebildet ist aus beidseitigen Auflagen, die von einem vorderen und einem hinteren, als Hohlkammer-Kastenprofil ausgebildeten querliegenden Tragprofil, oder einer Tragprofilschiene mit einem vorderen und einem hinteren Tragprofil überspannt sind, wobei die Tragprofile jeweils mindestens eine im Querschnitt T-förmige zur Oberseite hin offene Verbindungsnut aufweisen und bei dem einer der Sitze fest und der andere Sitz über Längslager, die jeweils in der T-förmigen Verbindungsnut angeordnet sind, quer zur Sitzrichtung verschiebbar angebracht ist.

Derartige Doppel-Fahrgastsitze werden insbesondere in Omnibussen eingebaut, wobei sich der fest eingebaute Sitz an der Außenwand und der verschiebbare Sitz sich an der Gangseite befindet. Das Verschieben des gangseitigen Sitzes dient dazu, nachdem sämtliche Fahrgäste Platz genommen haben, den Abstand zwischen dem feststehenden Sitz und der darauf sitzenden Person zur Komforterhöhung auf Kosten der Begehbarkeit des zwischen den Sitzen angeordneten Ganges zu verbreitern. Zum Ein- und Aussteigen allerdings müssen die Sitze wieder zusammengeschoben werden, um das Begehen des Ganges zwischen den Sitzen nicht zu behindern.

Diese, die Verschiebbarkeit der Fahrgastsitze ermöglichende Konstruktion, ist verhältnismäßig teuer und wird daher nur bei einer Komfortbestuhlung angewandt. Die Komfortbestuhlung allerdings ist nur mit, relativ zur Einfachbestuhlung, hohem Gewicht zu erreichen, da eine derartige Bestuhlung nicht nur eine bessere und damit schwerere Polsterung vorsieht, sondern beispielsweise auch eine verschwenkbare Rückenlehne, wie auch Fußstützen und sonstige Komforteinrichtungen, die allesamt das Gewicht eines solchen Fahrgastsitzes in die Höhe treiben. Dieses Gewicht muß nun im Falle einer abrupten Verzögerung, beispielsweise bei einem Unfall, von dem Sitz selbst wie auch von dessen Tragkonstruktion aufgenommen werden. Zu bedenken ist auch, daß bei einer solchen abrupten Verzögerung, insbesondere also bei einem Unfall, der Raum zwischen den Rückenlehnen der hintereinander angeordneten Fahrgastsitze den Überlebensraum des Fahrgastes darstellt. Ziel ist es daher, die durch eine abrupte Verzögerung nach vorne auf die Rückseite des Fahrgastsitzes geschleuderten Fahrgäste unter Energieverzehrung so aufzufangen, daß Verletzungen weitgehend vermieden werden. Diese Aufgabe übernimmt insbesondere die Rückenlehne, wobei allerdings Voraussetzung ist, daß das Untergestell so stabil ist, daß es den Sitz in einem solchen Falle halten und die Rückenlehne damit ihre Energie absorbierende Arbeit übernehmen kann. Dies bedeutet jedoch auch, daß das zum Verschieben des quer verschiebbaren Sitzes notwendige Längslager in der Lage sein muß, die bei einem Unfall quer zu seiner Längserstreckung einwirkenden hohen Kräfte aufzunehmen.

Erreicht wird dies nach der nicht vorveröffentlichten EP-A-0 492 976 dadurch, daß die Längslager jeweils in der T-förmigen Verbindungsnut angeordnet sind. Auf diese Längslager aufgebaut ist sodann ein Sitzgestellrahmen, auf den der eigentliche Sitz mit Rückenlehne montiert wird.

Aus der DE-A-3 147 045 (A1) ist eine Doppelsitzanordnung für Omnibusse bekannt, welche aus zwei Einzelsitzen besteht und einen diese Sitze tragenden Sitztragrahmen aufweist, der einerseits auf einer fensterseitigen Konsole des Omnibusses aufliegt und andererseits über mindestens ein Bein gangseitig am Fahrzeugboden abgestützt ist. Der gangseitige Sitz kann quer zur Sitzrichtung verschoben werden. Hierzu sind zwei zueinander parallele und aus je zwei ineinandergeführten Schienen zusammengesetzte Längsführungen vorhanden. Bei der Doppelsitzanordnung werden die Querträger des Sitztragrahmens durch die Unterschienen der Längsführungen gebildet, die sich unter beide Sitze erstrecken. Der vorderen Längsführung ist für jeden Sitz eine Arretiereinrichtung zugeordnet, welche mit der Unterschiene verbunden ist. Die Arretiereinrichtung ist innerhalb der vorderen Längsführung angeordnet. Sie besteht aus einem einarmigen, in einem Lagerpunkt angelenkten Arm, der etwa in seiner Mitte eine nach unten weisende Sperrnase und an seinem anderen Ende eine Handhabe trägt.

Es ist Aufgabe der Erfindung, einen eingangs genannten Sitz derart auszubilden, daß er ein geringes Gewicht aufweist, ohne daß die Festigkeit dadurch verringert wird.

Erreicht wird dies in erfindungsgemäßer Weise dadurch, daß die Längslager an quer zu den Tragprofilen verlaufenden Winkelblechen angebracht sind, die über ein Bodenblech miteinander verbunden sind, wobei aus dem Bodenblech eine parallel zu den Tragprofilen verlaufende, Rasteinschnitte aufweisende Zunge herausgeschnitten ist, welche mit ihren Rasteinschnitten in entsprechende Nocken des Untergestells eingreift.

Nicht mehr also wie bisher, sind die Längslager mit einem Montagerahmen verbunden, auf den dann erst der Sitz aufgebaut wird, sondern die Längslager tragen Winkelbleche, zwischen die sodann die Sitzkonstruktion eingefügt werden kann. Die Festigkeit dieser Konstruktion ist dadurch gegeben, daß die Winkelbleche, als Basis für die eigentliche Sitzkonstruktion, sicher auf den Längslagern geführt und gehalten sind, wobei ein Verecken der Winkelbleche beziehungsweise der mit ihnen verbundenen Längslager durch das eingefügte Bodenblech verhindert wird.

Das Bodenblech kann bei der Erfindung auch noch die weitere Aufgabe der Arretierung dieses verschiebbaren Fahrgastsitzes übernehmen dadurch, daß aus dem Bodenblech eine parallel zu den Tragprofilen verlaufende, Rasteinschnitte aufweisenden Zunge herausgeschnitten ist, die mit ihren Rasteinschnitten in entsprechende Nocken des Untergestells eingreift. Wird zudem noch ein quer zu den Tragprofilen verlaufendes Rastblech in den Verbindungsnuten der Tragprofile befestigt, so kann die jeweils gewünschte Verschiebelänge des verschiebbaren Fahrgastsitzes unschwer eingestellt beziehungsweise jeweils justiert werden dadurch, daß dieses Rastblech in den T-förmigen Verbindungsnuten in die jeweils gewünschte Lage verschoben und dann befestigt wird.

Insgesamt ergibt sich damit nicht nur eine deutliche Gewichtsverminderung und damit eine Herabsetzung des Totgewichts, sondern auch die Möglichkeit, weitere schwere und schwierig herstellbare und damit teure Konstruktionsteile für die Arretierung des Fahrgastsitzes einzusparen.

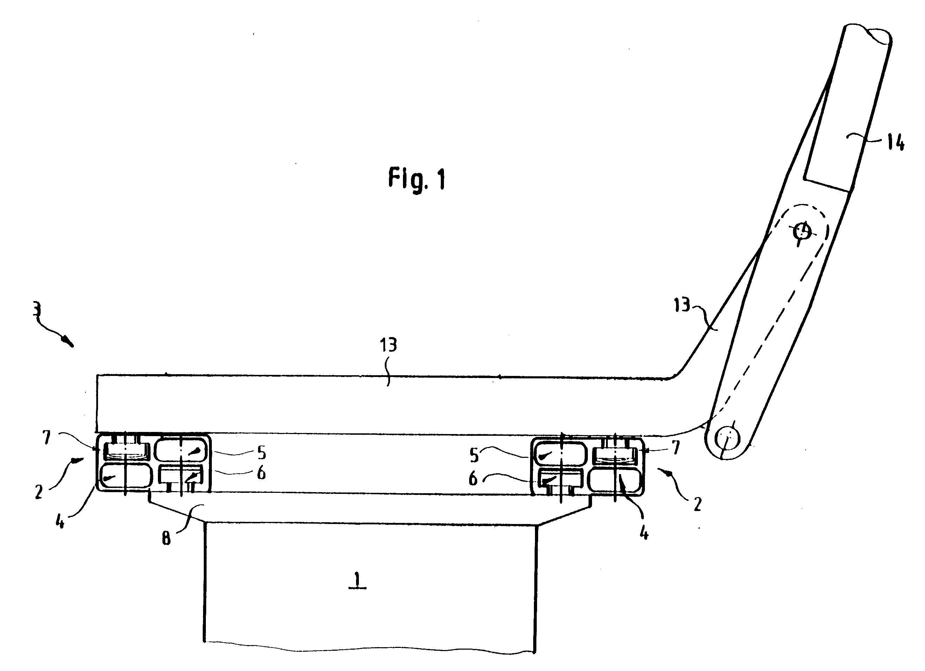

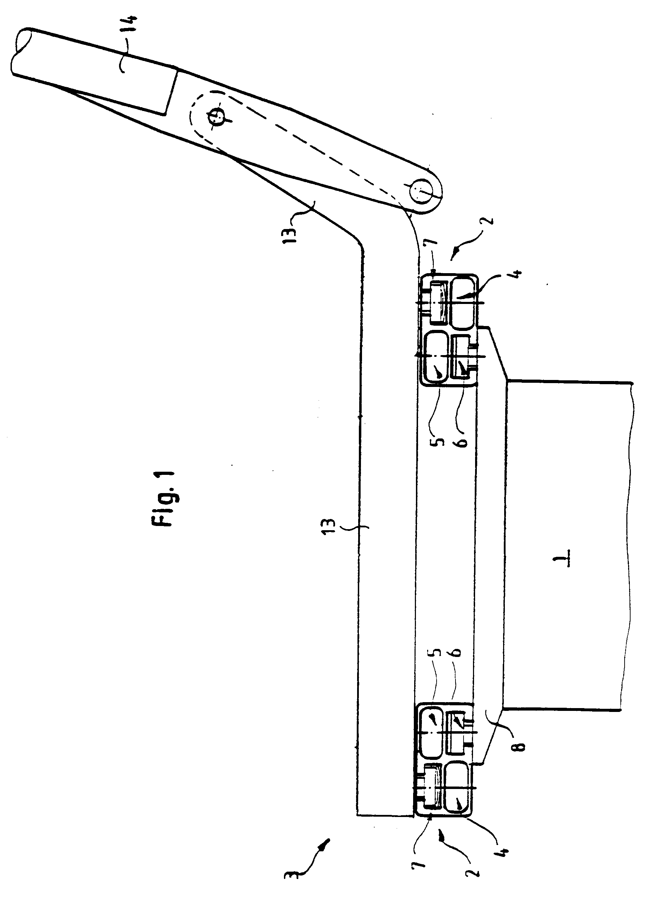

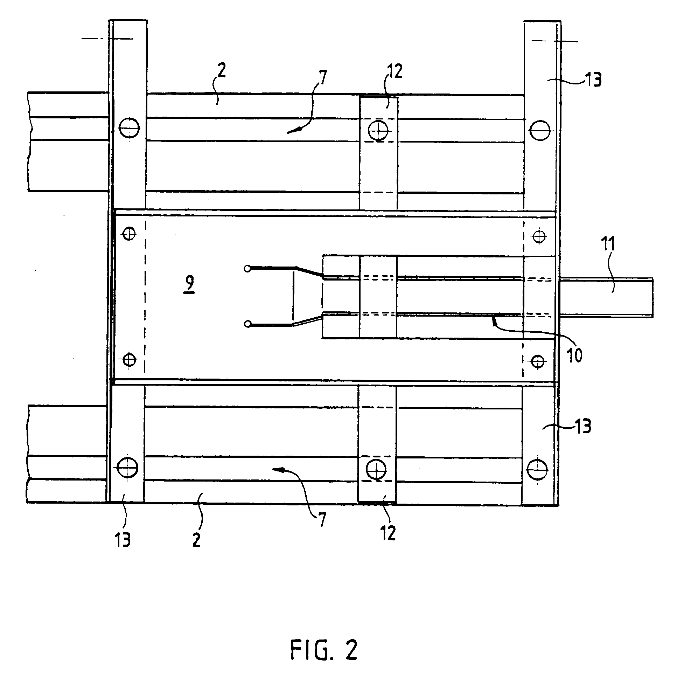

Auf der Zeichnung ist ein Ausführungsbeispiel des Erfindungsgegenstandes schematisch dargestellt und zwar zeigen Fig. 1 die Seitenansicht eines Fahrgastsitzes und Fig. 2 die Draufsicht hierzu.

Aus Fig. 1 sind Auflagen (1, 8) ersichtlich, auf die Tragprofile (2) aufgebaut sind. Die Tragprofile (2) bestehen aus flachliegenden Kastenholmen mit zwei Teil-Kastenholmen (4, 5) und einer unterseitigen (6) sowie einer oberseitigen T-förmigen Verbindungsnut (7). In die unterseitige T-förmige Verbindungsnut (6) sind Hammerkopfschrauben eingeführt, mit denen diese Tragprofile (2) auf der Unterlage (8) der Auflage (1, 8) angeschraubt sind. In die oberseitigen T-förmigen Verbindungsnuten (7) können ebenfalls gleiche Hammerkopfschrauben zur festen Befestigung des nichtverschiebbaren Sitzes eingeführt sein. Die Seitenansicht nach Fig. 1 zeigt allerdings in die T-förmigen Verbindungsnuten (7) eingeführte Gleitstücke, die als Längslager die Sitzkonstruktion (3) tragen. Diese Sitzkonstruktion (3) ist in erfindungsgemäßer Weise gebildet durch zwei Winkelbleche (13), die gegenseitig durch ein Bodenblech (9) miteinander verbunden sind (siehe auch Fig. 2). Aus dem Bodenblech (9) ist eine mit Rasteinschnitten (10) versehene Zunge (11) herausgeschnitten, die federnd auf einem Rastblech (12) aufliegt. Das Rastblech (12) ist, wiederum durch in die T-förmige Verbindungsnut (7) der Tragprofile (2) eingeführte Hammerkopfschrauben, mit den Tragprofilen (2) verbunden.

## Patentansprüche

1. Doppel-Fahrgastsitz, gebildet aus zwei nebeneinander angeordneten Sitzen mit Rückenlehne, die auf einem Untergestell angeordnet sind, das gebildet ist aus beidseitigen Auflagen, die von einem vorderen und einem hinteren, als Hohlkammer-Kastenprofil ausgebildeten querliegenden Tragprofil (2), oder einer Tragprofilschiene mit einem vorderen und einem hinteren Tragprofil überspannt sind, wobei die Tragprofile (2) jeweils mindestens eine im Querschnitt T-förmige, zur Oberseite hin offene Verbindungsnut (7) aufweisen und bei dem einer der Sitze fest und der andere Sitz über Längslager, die jeweils in der T-förmigen Verbindungsnut (7) angeordnet sind, quer zur Sitzrichtung verschiebbar angebracht ist,
dadurch gekennzeichnet,
daß die Längslager an quer zu den Tragprofilen (2) verlaufenden Winkelblechen (13) angebracht sind, die über ein Bodenblech (9) miteinander verbunden sind, wobei aus dem Bodenblech (9) eine parallel zu den Tragprofilen (2) verlaufende, Rasteinschnitte (10) aufweisende Zunge (11) herausgeschnitten ist, welche mit ihren Rasteinschnitten in entsprechende Nocken des Untergestells eingreift.

2. Doppel-Fahrgastsitz nach Anspruch 1,
dadurch gekennzeichnet,
daß ein quer zu den Tragprofilen (2) verlaufendes Rastblech (12) in den T-förmigen Verbindungsnuten (7) der Tragprofile (2) befestigbar ist.

## Claims

1. A double passenger seat formed from two seats arranged side-by-side with backrest, which are arranged on a support base structure which is formed from supports at both sides, which are spanned by front and rear transversely disposed support profile members (2) in the form of hollow-chamber box profile members, or a support profile bar with a front and a rear support profile member, wherein the support profile members (2) each have at least one connecting groove (7) which is of T-shaped cross-section and which is open towards the top side, and in which one of the seats is fixedly mounted and the other seat is mounted displaceably transversely relative to the seat direction by way of longitudinal mountings which are respectively arranged in the T-shaped connecting groove (7), characterised in that the longitudinal mountings are mounted on angle plates (13) which extend transversely to the support profile members (2) and which are connected together by way of a bottom plate (9), wherein cut out of the bottom plate (9) is a tongue (11) which extends parallel to the support profile members (2) and which has retaining incisions (10) and which engages with its retaining incisions into corresponding projections on the support base structure.

2. A double passenger seat according to claim 1 characterised in that a retaining plate (12) which extends transversely relative to the support profile members (2) can be fixed in the T-shaped connecting grooves (7) of the support profile members (2).

## Revendications

1. Siège de passager double formé par deux sièges avec dossiers disposés côte à côte qui sont placés sur un bâti, lequel est formé par deux supports disposés de part et d'autre qui sont maintenus écartés par un profilé porteur (2) transversal avant et arrière réalisé en tant que profilé en caisson ou par un rail en profilés porteurs comportant un profilé porteur avant et un profilé porteur arrière, sachant que les profilés porteurs (2) présentent chacun au moins une rainure d'assemblage (7) de section transversale en forme de T et ouverte vers le dessus et sachant également que l'un des sièges est fixe et que l'autre siège peut coulisser transversalement par rapport à la direction longitudinale du siège par le biais de paliers de butée qui sont chaque fois placés dans la rainure d'assemblage en forme de T (7), caractérisé en ce que les paliers de butée sont fixés à des tôles en équerre (13) s'étendant transversalement par rapport aux profilés porteurs (2), qui sont reliées entre elles par une tôle de fond (9), sachant que, dans la tôle de fond (9), est découpée une languette (11) s'étendant parallèlement aux profilés porteurs (2) et présentant des crans (10), qui s'enclenche avec ses crans sur des ergots correspondants du bâti.

2. Siège de passager double selon la revendication 1, caractérisé en ce qu'une tôle d'arrêt (12) s'étendant transversalement par rapport aux profilés porteurs (2) peut être fixée dans les rainures d'assemblage en forme de T (7) des profilés porteurs (2).
